# EUROPÄISCHE PATENTSCHRIFT

(11) **EP 3 412 489 B1**
(45) Veröffentlichungstag und Bekanntmachung des Hinweises auf die Patenterteilung: **11.03.2020**
(21) Anmeldenummer: 18173461.7
(22) Anmeldetag: 22.05.2018
(51) Int. Cl.: B60K 35/00, B60W 50/14

(54) **VERFAHREN UND ANZEIGEVORRICHTUNG ZUR SIGNALISIERUNG EINER AUFFORDERUNG ZUR ÜBERNAHME EINER FAHRFUNKTION EINES KRAFTFAHRZEUGS**
METHOD AND DISPLAY APPARATUS FOR SIGNALLING AN INVITATION TO TAKE OVER A DRIVING FUNCTION OF A MOTOR VEHICLE
PROCÉDÉ ET DISPOSITIF D'AFFICHAGE PERMETTANT DE SIGNALER UN APPEL DE PRISE D'UNE FONCTION DE CONDUITE D'UN VÉHICULE AUTOMOBILE

(30) Priorität: 01.06.2017 DE 102017112068
(43) Veröffentlichungstag der Anmeldung: 12.12.2018
(73) Patentinhaber: MAN Truck & Bus SE, 80995 München (DE)
(72) Erfinder: Michel, Britta, 81675 München (DE); Zimmermann, Andreas, 80995 München (DE); Wölfel, Christiane, 81539 München (DE); Blank, Daniel, 93133 Burglengenfeld (DE)
(74) Vertreter: v. Bezold & Partner Patentanwälte - PartG mbB

(56) Entgegenhaltungen:
- DE-A1-102013 110 852
- DE-A1-102014 106 241
- DE-A1-102015 214 685

## Beschreibung

Die Erfindung betrifft ein Verfahren zur Signalisierung einer Aufforderung zur Übernahme einer Fahrfunktion eines Kraftfahrzeugs durch einen Fahrer von einer autonomen Fahrfunktion des Kraftfahrzeugs oder durch die autonome Fahrfunktion von dem Fahrer. Die Erfindung betrifft ferner eine Anzeigevorrichtung, die ausgebildet ist, das Verfahren auszuführen.

Aus dem Stand der Technik sind Kraftfahrzeuge bekannt, die in einem autonomen Fahrmodus betreibbar sind, in welchem das Kraftfahrzeug mithilfe eines Fahrerassistenzsystems selbsttätig eine sowohl eine Längsführung als auch eine Querführung des Kraftfahrzeugs umfassende Fahrzeugführung durchführt.

Ist ein Fahrzeug in der Lage, automatisiert zu fahren, so kann sich das Fahrzeug in unterschiedlichen Modi bewegen. Es ist davon auszugehen, dass auch Fahrzeuge, die hoch- und vollautomatisiert fahren können, in niedrigeren Stufen der Automatisierung fahren können. Gemäß einer Einteilung des deutschen Verbands der Automobilindustrie e.V. (VDA) können die unterschiedlichen Modi in die folgenden Stufen eingeteilt werden:
- Stufe 0: Manuelle Fahrt (Stufe 0);
- Stufe 1: Assistierte Fahrt (z. B. mit ACC);
- Stufe 2: Teilautomatisierte Fahrt (z. B. Staupilot mit kurzzeitiger Übernahme Längs- und Querführung);
- Stufe 3: Hochautomatisierte Fahrt (erlaubt Nebentätigkeiten; Übernahme des Fahrzeugs innerhalb ca. 10 Sek. nötig);
- Stufe 4: Vollautomatisierte Fahrt (erlaubt Nebentätigkeiten, Fahrzeug muss im Notfall selbst in der Lage sein, sicher zum Stehen zu kommen).

Unter einem autonomen Fahrmodus wird in diesem Dokument eine hochautomatisierte Fahrt oder eine vollautomatisierte Fahrt des Fahrzeugs verstanden, die Nebentätigkeiten des Fahrers erlaubt, also z. B. einem Fahrmodus der Stufe 3 oder 4 gemäß vorstehender Einteilung.

Aus der Offenlegungsschrift DE 10 2013 019 141 A1 ist beispielsweise ein Verfahren zum Betreiben eines Fahrerassistenzsystems eines Kraftfahrzeugs bekannt, wobei das Fahrerassistenzsystem in einem autonomen Fahrmodus selbsttätig eine sowohl eine Längsführung als auch eine Querführung des Kraftfahrzeugs umfassende Fahrzeugführung durchführt und dabei ein Wechselsignal empfängt, welches dazu ausgelegt ist, bei dem Fahrerassistenzsystem einen Wechsel von dem autonomen Fahrmodus in einen vorbestimmten anderen Fahrmodus anzustoßen, in welchem bestimmungsgemäß ein Fahrer des Kraftfahrzeugs zumindest einen Teil der Fahrzeugführung durchführt.

Das Dokument DE 10 2015 214685 A1 beschreibt ein Verfahren zum Darstellen von Fahrmodi eines Fahrzeugs, wobei das Fahrzeug in zumindest zwei unterschiedlichen Fahrmodi betreibbar ist. Auf einer Anzeigefläche werden grafische Elemente erzeugt, die verschiedenen Akteure (bspw. den Fahrer und das Fahrzeug) der Fahrmodi sowie die Fahrmodi selbst repräsentieren. Ferner erfolgt in einer Ausgestaltungsform der Erfindung eine Darstellung der Zeitreserve, nach welcher die Übernahme der Fahrfunktion zwischen dem ersten und zweiten Akteur stattfindet.

Das Dokument DE 10 2014 106241 A1 betrifft ein Verfahren zur Unterstützung eines Fahrzeugführers eines mit mindestens einem Assistenzsystem ausgerüsteten Fahrzeugs, wobei das Assistenzsystem in einem aktivierten Zustand teilweise oder vollständig die Fahraufgabe von dem Fahrzeugführer übernehmen kann. Dabei werden Zustandsdaten des Assistenzsystems ermittelt und an ein mobiles Endgerät übertragen, um dort Informationen in Abhängigkeit der ermittelten Zustandsdaten auszugeben.

Dem Dokument DE 10 2013 110852 A1 kann ein Fahrerassistenzsystem für ein Fahrzeug entnommen werden. Das Fahrerassistenzsystem ist ausgestaltet, das Fahrzeug zumindest teilweise automatisch zu steuern. Bei dem Verfahren wird ein Beginn eines Autopilotstreckenabschnitts in einem für das Fahrzeug geplanten Streckenverlauf bestimmt. Entlang dem Autopilotstreckenabschnitt ist das Fahrerassistenzsystem in der Lage, das Fahrzeug automatisch zu steuern. Ein Abstand zwischen der aktuellen Position des Fahrzeugs und dem Beginn des Autopilotstreckenabschnitts wird bestimmt und in dem Fahrzeug ausgegeben.

Aus der Druckschrift US 8,260,482 B1 ist ein autonomes Fahrzeug bekannt, bei welchem der Fahrer die Fahrzeugkontrolle an einen Steuerungsrechner übergeben kann, wenn der Steuerungsrechner ermittelt hat, dass er in der Lage ist, das Fahrzeug in sicherer Weise durch den Verkehr bringen zu können. Ungeachtet dessen kann der Fahrer jederzeit die Kontrolle über sein Fahrzeug durch eine Betätigung einer entsprechenden Einrichtung wieder erlangen. Um anzuzeigen, dass der Steuerungsrechner die Kontrolle über das Fahrzeug übernommen hat, kann eine geeignete Ausleuchtung von Teilen des Lenkrades oder einer Leuchtanzeige der Armatur bewirkt werden, wobei die Ausleuchtung in verschiedenen Farben erfolgen kann. Dabei kann zusätzlich ein Dimmungseffekt, d. h. ein zeitlich veränderliches Ausleuchten, zum Einsatz kommen.

Fahrzeuge, die eine Automatisierung der Stufe 3 und 4 gemäß der vorgenannten VDA-Einteilung aufweisen, können die Längs- und Querführung für einen abgegrenzten Zeitraum bzw. Streckenabschnitt übernehmen. Obwohl der Fahrer sich in diesem Zeitraum auch anderen Aufgaben zuwenden kann, sollte er immer über den Status der automatisierten Fahrt Bescheid wissen, vor allem dann, wenn der Streckenabschnitt endet, auf dem automatisiert gefahren werden kann. Hier sollte die autonome Fahrfunktion den Fahrer darauf aufmerksam machen, dass er im Folgenden wieder die Fahrfunktion übernehmen muss, sowie Informationen zum Übernahmezeitpunkt übermitteln. Die Kommunikation dieser Informationen sollte klar und verständlich sein. Nur so kann ein sicherer Übergang in die manuelle Fahrt gewährleistet werden. Da sich der Fahrer in den Automatisierungsstufen 3 und 4 auch Nebentätigkeiten zuwenden kann und sich nicht mehr der Fahraufgabe widmen muss, sollte gewährleistet sein, dass der Fahrer, auch wenn er nicht mit Blick nach vorne sitzt, immer weiß, wann er wieder die Fahraufgabe übernehmen muss. Gerade im Nutzfahrzeug kann es in einem ausgeprägten Fall sogar dazu kommen, dass der Fahrer sich auf der Liege im Fahrzeug ausruht, während das Fahrzeug automatisiert die Route fährt. Für solche Fälle ist es wichtig, dass der Fahrer nicht nur über das Kombiinstrument über die bevorstehende Übernahme der Fahraufgabe informiert wird, sondern auch von anderen Positionen im Fahrerhaus abschätzen kann, wie lange z. B. die automatisierte Fahrt noch möglich ist.

Aus der Druckschrift DE 10 2013 006 793 A1 ist ein Verfahren zur Übernahme der Fahrfunktion während einer Dunkelfahrt durch den Fahrer eines Kraftfahrzeugs von der autonomen Fahrfunktion des Kraftfahrzeugs oder durch die autonome Fahrfunktion des Kraftfahrzeugs von dem Fahrer des Kraftfahrzeugs bekannt, wobei zwischen dem Einleiten einer Übernahme der Fahrfunktion und der tatsächlichen Übernahme der Fahrfunktion eine Dimmung der Innenraumbeleuchtung zur Adaption des Sehvermögens des Fahrers erfolgt.

Nachteilig an diesem Verfahren ist, dass es dem Fahrer nur bei Dunkelfahrt einen visuellen Hinweis zur bevorstehenden Übernahme der Fahrfunktion gibt. Ferner kann der Fahrer aus dem Dimmungsverhalten nicht zuverlässig ableiten, wann die Übernahme der Fahrfunktion erforderlich ist.

Im Hinblick auf die zunehmende Bedeutung von autonom betreibbaren Fahrzeugen ist es daher eine Aufgabe der Erfindung, den bekannten Stand der Technik weiterzubilden, insbesondere um eine Möglichkeit bereitzustellen, eine Aufforderung zur Übernahme einer Fahrfunktion eines Kraftfahrzeugs durch einen Fahrer von einer autonomen Fahrfunktion des Kraftfahrzeugs oder durch die autonome Fahrfunktion von dem Fahrer zu signalisieren, mit der Nachteile herkömmlicher Ansätze vermieden werden können.

Diese Aufgaben werden durch Verfahren und Vorrichtungen mit den Merkmalen der unabhängigen Ansprüche gelöst. Vorteilhafte Ausführungsformen und Anwendungen der Erfindung ergeben sich aus den abhängigen Ansprüchen und werden in der folgenden Beschreibung unter teilweiser Bezugnahme auf die Figuren näher erläutert.

Gemäß einem ersten allgemeinen Gesichtspunkt der Erfindung wird ein Verfahren zur Signalisierung einer Aufforderung zur Übernahme einer Fahrfunktion eines Kraftfahrzeugs durch einen Fahrer von einer autonomen Fahrfunktion des Kraftfahrzeugs oder durch die autonome Fahrfunktion von dem Fahrer bereitgestellt. Gemäß dem Verfahren kann somit einem Fahrer des Kraftfahrzeugs die Aufforderung signalisiert werden, dass der Fahrer die Fahrfunktion von einer autonomen Fahrfunktion übernehmen soll, d. h., der Fahrmodus soll von autonomer Fahrzeugführung auf manuellen (bzw. assistierten) Fahrbetrieb wechseln, oder dass die autonome Fahrfunktion den Fahrbetrieb von einem manuellen (bzw. assistierten) Fahrbetrieb des Fahrers übernehmen kann.

Der Begriff der "Übernahme einer Fahrfunktion" kann somit sowohl die Übernahme der Fahrfunktion von der autonomen Fahrfunktion durch den Fahrer als auch die Übergabe der Fahrfunktion an die autonome Fahrfunktion durch den Fahrer umfassen. Vorstehend wurde bereits festgestellt, dass unter einem autonomen Fahrmodus bzw. einer autonomen Fahrfunktion in diesem Dokument eine hochautomatisierte Fahrt oder eine vollautomatisierte Fahrt des Fahrzeugs verstanden wird, die Nebentätigkeiten des Fahrers erlaubt, also z. B. einem Fahrmodus der Stufe 3 oder 4 gemäß vorstehender Einteilung.

Hierbei wird die Aufforderung zur Übernahme der Fahrfunktion durch eine optische Anzeige signalisiert, deren Anzeigezustand sich bis zur tatsächlichen Übernahme der Fahrfunktion ändert, derart, dass aus dem aktuellen Anzeigezustand ein Maß für die Restzeit und/oder Restfahrstrecke bis zu einer gewünschten Übernahme der Fahrfunktion ableitbar ist. Unter der Restzeit wird dabei die verbleibende Zeit und unter der Restfahrstrecke dabei die verbleibende Fahrstrecke bis zu einer gewünschten Übernahme der Fahrfunktion durch den Fahrer bzw. bis zu einem möglichen Übergabezeitpunkt an das Fahrzeug verstanden.

Ein besonderer Vorzug der Erfindung liegt somit darin, dass dem Fahrer mittels einer optischen Anzeige nicht nur signalisiert wird, dass eine Übernahme der Fahrfunktion bevorsteht, sondern dass der Fahrer aus der optischen Anzeige zugleich ein Maß dafür ableiten kann, wie viel Zeit oder Fahrstrecke noch verbleibt, bis er die Fahrfunktion übernehmen oder abgeben soll. Falls der Fahrer beispielsweise während eines autonomen Fahrmodus gerade einer Nebentätigkeit nachgeht und dann mit der optischen Anzeige die bevorstehende Übernahme der Fahrfunktion des Kraftfahrzeugs von der autonomen Fahrfunktion signalisiert bekommt, kann der Fahrer anhand der optischen Anzeige ein Maß, d. h. einen Wert oder zumindest eine Schätzung, betreffend die Restzeit und/oder Restfahrstrecke ableiten, entsprechend seine Nebentätigkeit geordnet beenden und sich zu geeigneter Zeit auf die Übernahme der Fahrfunktion vorbereiten.

Unter einer gewünschten Übernahme der Fahrfunktion wird vorzugsweise ein von einem Fahrerassistenzsystem zur autonomen Fahrzeugführung bestimmter vorausliegender Übernahmepunkt (Zeitpunkt oder Stelle auf der vorausliegenden Fahrtstrecke) verstanden, an dem oder bis spätestens zu dem der Wechsel des Fahrmodus bzw. die Übernahme der Fahrfunktion vorteilhafterweise stattfinden soll. Beispielsweise analysieren Fahrerassistenzsysteme zur autonomen Fahrzeugführung fortlaufend anhand von Fahrzeugdaten, Streckendaten und/oder Umgebungsdaten die Fahrsituation, um Streckenabschnitte zu ermitteln, auf denen das System in der Lage ist, das Fahrzeug in sicherer Weise durch den Verkehr bringen zu können, und die somit zur autonomen Fahrzeugführung geeignet sind.

Die Restzeit bzw. Restrecke bis zu einer gewünschten Übernahme der Fahrfunktion kann entsprechend den letztmöglichen Zeitpunkt bzw. Streckenpunkt angeben, bis zu dem die Übernahme der Fahrfunktion erfolgen soll oder muss. Alternativ kann die Restzeit bzw. Restrecke bis zu einer gewünschten bzw. empfohlenen Übernahme der Fahrfunktion den gewünschten Zeitpunkt bzw. Streckenpunkt angeben, an dem die Übernahme der Fahrfunktion erfolgen soll.

Erfindungsgemäß ist vorgesehen, dass die optische Anzeige eine anteilige, insbesondere bereichsweise, ansteuerbare Leuchtfläche umfasst, die in Abhängigkeit von der Restzeit und/oder Restfahrstrecke anteilig, insbesondere bereichsweise, in einem ersten Anzeigezustand dargestellt wird. Hierbei kann eine Größe, insbesondere eine Länge, des in dem ersten Anzeigezustand dargestellten Bereichs mit der Restzeit und/oder Restfahrstrecke korrelieren. Beispielsweise kann gemäß dem Verfahren die Größe, z. B. die Länge, des in dem ersten Anzeigezustand dargestellten Bereichs kontinuierlich mit der abnehmenden Restzeit und/oder Restfahrstrecke abnehmen.

Je kleiner die Größe, z. B. je kürzer die Länge, des in dem ersten Anzeigezustand dargestellten Bereichs, desto kürzer die Restzeit und/oder die Restfahrstrecke.

Auf diese Weise kann auf eine von einem Fahrer intuitiv erfassbare Weise ein Maß für die Restzeit und/oder die Restfahrstrecke kodiert werden.

Die Leuchtfläche kann als Lichtleiste (Leuchtleiste) und/oder Lichtstreifen (Leuchtstreifen) ausgeführt sein. Derartige Leuchtflächen können platzsparend an unterschiedlichsten Stellen im Innenraum des Kraftfahrzeugs angebracht werden. Vorzugsweise korreliert eine Länge des in dem ersten Anzeigezustand dargestellten Bereichs einer derartigen Leuchtleiste oder eines derartigen Lichtstreifens mit der Restzeit und/oder Restfahrstrecke, so dass trotz des geringen Platzbedarfs einer derartigen Leuchtfläche auf diese Weise ein für den Fahrer gut erkennbares Maß für die Restzeit und/oder Restfahrstrecke bis zu einer gewünschten Übernahme darstellbar ist.

Die Leuchtfläche kann als LED-Anordnung ausgeführt sein, beispielsweise als LED-Leiste oder als LED-Streifen, d. h. eine LED-Anordnung in Streifenform. Die optische Anzeige und die Leuchtfläche können ferner mit einem anderen geeigneten Leuchtmittel realisiert werden, insbesondere einem Leuchtmittel, das einzeln ansteuerbare Lichtquellen umfasst.

Gemäß einem weiteren Aspekt kann eine Anfangsgröße des in dem ersten Anzeigezustand dargestellten Bereichs eine fixe Restzeit oder Restfahrstrecke bis zu einer gewünschten Übernahme der Fahrfunktion angeben. Gemäß diesem Aspekt wird die optische Anzeige immer eine feste Zeit, z. B. x Minuten, oder feste Fahrstrecke, z. B. y Kilometer, vor der gewünschten Übernahme der Fahrfunktion in dem ersten Anzeigezustand anzeigen, wobei die Größe des im ersten Anzeigezustand dargestellten Bereichs ausgehend von der Anfangsgröße anschließend fortwährend bis zur tatsächlichen Übernahme abnimmt. Gemäß diesem Aspekt kann der Fahrer ab Erscheinen der optischen Anzeige im ersten Anzeigezustand sowie nachfolgend während der verschiedenen Anzeigezustände leicht intuitiv abschätzen, wie viel Zeit verbleibt, bis die Fahrfunktion übernommen werden sollte oder bis die Fahrfunktion/Fahraufgabe an das Fahrzeug übergeben werden kann.

Gemäß einer alternativen Variante kann eine Anfangsgröße des in dem ersten Anzeigezustand dargestellten Bereichs eine prognostizierte Gesamtzeitdauer oder Gesamtstrecke bis zu einer gewünschten Übernahme der Fahrfunktion angeben, insbesondere eine prognostizierte Gesamtzeitdauer oder Gesamtstrecke, die mit der autonomen Fahrfunktion gefahren wird.

Gemäß einem weiteren Aspekt kann ein nicht in dem ersten Anzeigezustand angezeigter Bereich der Leuchtfläche in einem vom ersten Anzeigezustand verschiedenen zweiten Anzeigezustand angezeigt werden. Hierbei kann sich ein Größenverhältnis zwischen dem im ersten Anzeigezustand angezeigten Bereich und dem im zweiten Anzeigezustand angezeigten Bereich entsprechend einem momentanen Wert der Restzeit und/oder der Restfahrstrecke bis zur gewünschten Übernahme der Fahrfunktion zeitlich verschieben. Ferner kann sich ein Trennbereich zwischen dem im ersten Anzeigezustand angezeigten und dem im zweiten Anzeigezustand angezeigten Bereich entsprechend einem momentanen Wert der Restzeit und/oder der Restfahrstrecke bis zur gewünschten Übernahme der Fahrfunktion zeitlich verschieben.

Auf diese Weise ähnelt die optische Anzeige zur Signalisierung der Aufforderung zur Übernahme der Fahrfunktion metaphorisch einer ablaufenden Zündschnur. Auf diese Weise kann der Fahrer aus dem Größenverhältnis der beiden Anzeigezustände der Leuchtfläche ein Maß für die Restzeit und/oder Restfahrstrecke bis zur gewünschten Übernahme der Fahrfunktion ableiten.

Die beiden Anzeigezustände können durch unterschiedliche Farben und/oder Helligkeiten gekennzeichnet sein. Der zweite Anzeigezustand kann ferner darin bestehen, dass die Leuchtfläche in diesem Bereich nicht beleuchtet, d. h. ausgeschaltet ist. Der Trennbereich bzw. die Grenze zwischen erstem und zweitem Anzeigezustand kann z. B. in Fahrtrichtung gesehen von rechts nach links oder umgekehrt verlaufen.

Ferner kann sich auch die Darstellung des Bereichs im ersten Anzeigezustand selbst ändern. Beispielsweise kann durch die Änderung der Farbe, der Intensität, und/oder einer Blinkfrequenz des ersten Anzeigezustands in Abhängigkeit von der Restzeit und/oder Restfahrstrecke die Dringlichkeit der Übernahme der Fahrfunktion mit zunehmendem Ablauf der Restzeit und/oder Restfahrstrecke signalisiert werden.

Lediglich beispielhaft kann sich bei einer Ausführung der Leuchtfläche als LED-Leiste oder LED-Band die Farbe, Intensivität der Beleuchtung, Frequenz und/oder Zahl der angesteuerten LEDs in Abhängigkeit von der Restzeit und/oder Restfahrstrecke ändern.

Gemäß einem weiteren Aspekt kann sich eine Helligkeit der optischen Anzeige mittels eines Lichtsensors an die Helligkeit der Umgebung und/oder des Fahrzeuginnenraums anpassen. Ferner kann vorgesehen sein, dass eine Helligkeit der optischen Anzeige manuell einstellbar ist.

Gemäß einem weiteren Aspekt kann die Änderung der Größe des Bereichs im ersten Anzeigezustand unterschiedlich schnell sein. Beispielsweise kann die Größe des Bereichs im ersten Anzeigezustand mit steigender Geschwindigkeit schneller abnehmen.

Die Leuchtfläche der optischen Anzeige kann gemäß der Erfindung im Innern bzw. im Fahrgastraum des Fahrzeugs angeordnet sein, kann in einer erfindungsgemäßen Variante aber auch im Außenbereich z. B. bei einem Stadtbus angezeigt werden. Bei einem Nutzfahrzeug, insbesondere einem Lastkraftwagen, ist die optische Anzeige vorzugsweise im Innern des Fahrerhauses angeordnet. Die Leuchtfläche kann auch nicht gemäß der Erfindung auf einem mobilen Endgerät, auf dem der Fahrer eine Nebentätigkeit ausführt, dargestellt werden, z. B. unter Verwendung eines Displays des Endgeräts.

Gemäß der Erfindung kann die Leuchtfläche an einem Dachbereich, insbesondere einem Dachhimmel, einer Rückwand einer Fahrerkabine eines Nutzfahrzeugs oder an einer Seitenverkleidung des Kraftfahrzeugs angeordnet sein. Ferner kann zum Beispiel eine als LED-Band ausgeführte Leuchtfläche der optischen Anzeige ganz rechts an einer Instrumententafel starten, sich bis zum Lenkrad erstrecken und auf dem Lenkrad wieder weiter geführt werden. Bei Rechtslenkern, z. B. bei Fahrzeugen für Großbritannien, wäre der Verlauf umgekehrt, d. h. das LED-Band würde links an der Instrumententafel starten. Der Bereich, der auf dem Lenkrad weiter geführt ist, kann beispielsweise dazu verwendet werden, einen bestimmten Zeitraum zu signalisieren, z. B. dass das die Fahrfunktion vom Fahrer innerhalb von 10 Sekunden übernommen werden muss, wenn der farbig abgesetzte Teil des LED-Bandes das Lenkrad erreicht hat.

Beispielsweise kann die Leuchtfläche mindestens zwei Teilbereiche aufweisen, die jeweils auf unterschiedlichen Stellen eines Bauteils im Fahrgastinnenraum angeordnet sind oder die auf unterschiedlichen Seiten in Bezug auf das Bauteil angeordnet sind. Das Bauteil kann beispielsweise das Lenkrad oder die Instrumententafel sein.

Gemäß einer weiteren vorteilhaften Ausführungsform weist die optische Anzeige mindestens eine Markierung, z. B. in Form eines Markers, auf, deren Erreichen, insbesondere durch einen Randbereich des im ersten Anzeigezustand dargestellten Bereichs, anzeigt, dass die Restzeit oder Restfahrstrecke eine vorbestimmte Höhe aufweist. Gemäß einer vorteilhaften Variante dieser Ausführungsform kann die Markierung stets an der gleichen Stelle, insbesondere unabhängig vom aktuellen Anzeigezustand, angezeigt werden. Derartige Markierungen bieten den Vorteil, dass besondere Zeitpunkte in Bezug auf eine bevorstehende Übernahme der Fahrfunktion hervorgehoben werden können. So kann beispielsweise eine Markierung den Zeitpunkt von einer Minute Restzeit oder eine verbleibende Restfahrstrecke von einem Kilometer vor der gewünschten Übernahme visuell hervorheben.

Ferner besteht die Möglichkeit, dass der aktuelle Anzeigezustand der optischen Anzeige, aus dem ein Maß für die Restzeit und/oder Restfahrstrecke bis zu einer gewünschten Übernahme der Fahrfunktion ableitbar ist, synchronisiert ist mit einer optischen oder akustischen Ausgabe zur Signalisierung der Aufforderung zur Übernahme der Fahrfunktion, die mittels einer weiteren Ausgabeeinrichtung des Kraftfahrzeugs ausgegeben wird. Der Anzeigezustand der Leuchtfläche der optischen Anzeige verändert sich gemäß dieser Variante somit synchron zu den Informationen betreffend die Übernahme der Fahrfunktion, die mittels anderer Ausgabestellen des Kraftfahrzeugs erzeugt werden.

Gemäß einem weiteren Aspekt umfasst das Verfahren das Empfangen einer Information, die eine verbleibende Restzeit und/oder Restfahrstrecke bis zu einem gewünschten Übernahmepunkt der Fahrfunktion angibt. Eine derartige Information kann beispielsweise von einem Fahrerassistenzsystem zur Durchführung der autonomen Fahrfunktion generiert werden.

Gemäß einem zweiten allgemeinen Gesichtspunkt der Erfindung wird eine Anzeigevorrichtung zur Signalisierung einer Aufforderung zur Übernahme einer Fahrfunktion eines Kraftfahrzeugs bereitgestellt. Die Anzeigevorrichtung kann ein Leuchtmittel zur Erzeugung einer optischen Anzeige und eine Steuereinrichtung zur Ansteuerung des Leuchtmittels umfassen. Die Anzeigevorrichtung, insbesondere die Steuereinrichtung, ist ausgebildet, das Verfahren zur Signalisierung einer Aufforderung zur Übernahme/Übergabe einer Fahrfunktion eines Kraftfahrzeugs durch einen Fahrer von einer autonomen Fahrfunktion des Kraftfahrzeugs oder durch die autonome Fahrfunktion von dem Fahrer, wie in diesem Dokument beschrieben, auszuführen.

Das Leuchtmittel kann eine LED-Anordnung umfassen. Die LED-Anordnung kann zur Ausbildung der Leuchtfläche streifenförmig oder als LED-Leiste oder LED-Band ausgeführt sein.

Zur Vermeidung von Wiederholungen sollen rein verfahrensgemäß offenbarte Merkmale auch als vorrichtungsgemäß offenbart gelten und beanspruchbar sein. Die vorgenannten Aspekte und erfindungsgemäßen Merkmale, insbesondere im Hinblick auf die Ausbildung der optischen Anzeige, gelten somit auch für die Anzeigevorrichtung.

Ein weiterer Vorteil des erfindungsgemäßen Ansatzes ist, dass die optische Anzeige und die Leuchtfläche auch für weitere Funktionen genutzt werden können. So kann im Passiv-Zustand des Kraftfahrzeugs, d. h. im Nicht-Fahrbetrieb, die Leuchtfläche der Anzeigevorrichtung vom Fahrer in einer beliebigen oder vorbestimmten Farbe angesteuert werden, um das Interieur des Fahrzeugs zu beleuchten. Die Leuchtfläche kann gemäß einer weiteren Variante während der manuellen Fahrt als ein Ambientelicht in einer beliebigen oder vorbestimmten Farbe angesteuert werden, um das Interieur des Fahrzeugs zu beleuchten.

Gemäß einem weiteren Aspekt kann die Steuereinrichtung ausgeführt sein, in einem Nicht-Fahrbetrieb des Kraftfahrzeugs das Leuchtmittel in einen vorbestimmten Leuchtzustand zu versetzen, falls eine vorbestimmte Überwachungsbedingung erfüllt ist. Die vorbestimmte Überwachungsbedingung kann erfüllt sein, falls eine zuvor eingestellte Uhrzeit eingetreten ist. Die optische Anzeige kann somit ferner als Weckfunktion dienen. Die vorbestimmte Überwachungsbedingung kann ferner erfüllt sein, falls ein Diebstahlversuch und/oder eine Bewegung oder Berührung in einem äußeren Nahbereich des Kraftfahrzeugs erkannt wird. Die optische Anzeige kann somit ferner als Teil einer Alarmfunktion des Fahrzeugs dienen. Die optische Anzeige kann gemäß einem weiteren Aspekt, in Situationen, in denen keine Übernahme der Fahrfunktion signalisiert werden muss, auch zur Signalisierung einer Länge der vorgeschriebenen Pause eines Fernfahrers verwendet werden. Gemäß diesem Aspekt kann, sobald die Pause startet, sich die Leuchtfläche, z. B. das LED-Band, langsam füllen. Ein "volles", d. h. vollständig leuchtendes Band würde so bedeuten, dass die vorgeschriebene Pausenzeit erreicht ist.

Gemäß einem weiteren Aspekt kann die Steuereinrichtung ausgeführt sein, in einem Platoon-Fahrbetrieb des Kraftfahrzeugs eine Restzeit und/oder Restfahrstrecke bis zu einer prognostizierten Auflösung des Platoon-Fahrbetriebs des Fahrzeugs durch eine optische Anzeige mittels des Leuchtmittels zu signalisieren. Hierbei ist die Steuereinrichtung ausgeführt, den Anzeigezustand der optischen Anzeige bis zur tatsächlichen Auflösung des Platoon-Fahrbetriebs zu ändern, derart, dass aus dem aktuellen Anzeigezustand ein Maß für die Restzeit und/oder Restfahrstrecke bis zu der Auflösung des Platoon-Fahrbetriebs ableitbar ist. Der erfindungsgemäße Ansatz zur Signalisierung der Aufforderung zur Übernahme des Fahrbetriebs kann somit analog zur Signalisierung des Übergangs vom Platoon-Fahrbetrieb zum Nicht-Platoon-Fahrbetrieb und somit wieder zur Übernahme der Fahraufgabe angewandt werden.

Ein Platoon-Fahrbetrieb, sog. Platooning, ist ein Fahrbetrieb, bei dem mehrere oder sogar viele Fahrzeuge mit Hilfe eines technischen Steuerungssystems in sehr geringem Abstand hintereinander fahren können, ohne dass die Verkehrssicherheit beeinträchtigt wird.

Die Erfindung betrifft ferner ein Kraftfahrzeug, insbesondere Nutzfahrzeug, mit einer Anzeigevorrichtung, wie in diesem Dokument beschrieben.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Ablaufdiagramm zur Illustration eines Verfahrens gemäß einer Ausführungsform der Erfindung;
- Figur 2A: schematisch eine optische Anzeige zur Signalisierung einer Aufforderung zur Übernahme einer Fahrfunktion gemäß einer Ausführungsform der Erfindung;
- Figur 2B: schematisch eine optische Anzeige zur Signalisierung einer Aufforderung zur Übernahme einer Fahrfunktion gemäß einer weiteren Ausführungsform der Erfindung;
- Figur 3A: schematisch die optische Anzeige aus Figur 2A in einem späteren Anzeigezustand;
- Figur 3B: schematisch die optische Anzeige aus Figur 2A in einem noch späteren Anzeigezustand;
- Figur 4: schematisch eine optische Anzeige zur Signalisierung einer Aufforderung zur Übernahme einer Fahrfunktion gemäß einer weiteren Ausführungsform der Erfindung;
- Figur 5: schematisch eine optische Anzeige zur Signalisierung einer Aufforderung zur Übernahme einer Fahrfunktion gemäß einer weiteren Ausführungsform der Erfindung; und
- Figur 6: ein Blockdiagramm zur Illustration einer Anzeigevorrichtung gemäß einer Ausführungsform der Erfindung.

Gleiche oder funktional äquivalente Elemente sind in allen Figuren mit denselben Bezugszeichen bezeichnet und zum Teil nicht gesondert beschrieben.

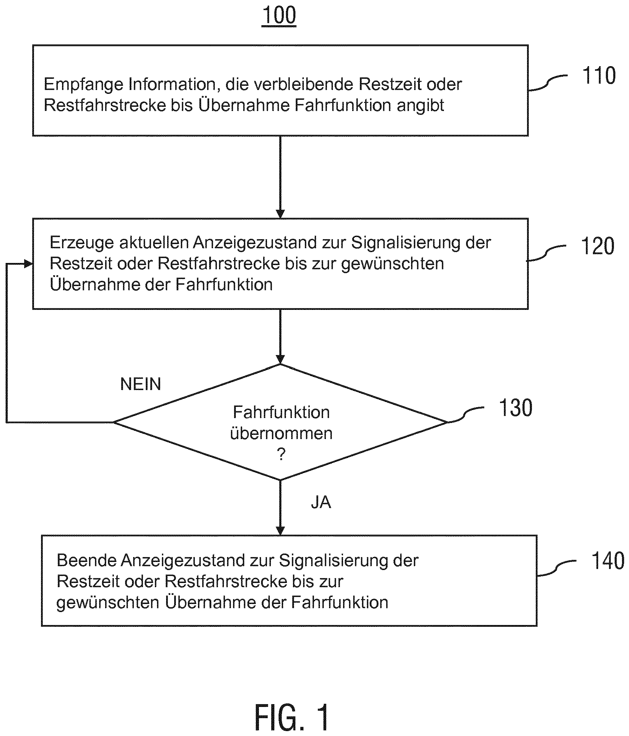

Figur 1 zeigt schematisch ein Ablaufdiagramm zur Illustration eines Verfahrens 100 zur Signalisierung einer Aufforderung zur Übernahme einer Fahrfunktion eines Kraftfahrzeugs durch einen Fahrer von einer autonomen Fahrfunktion des Kraftfahrzeugs oder durch die autonome Fahrfunktion von dem Fahrer gemäß einer Ausführungsform der Erfindung.

Das Kraftfahrzeug ist ein Kraftfahrzeug, das wahlweise in einem autonomen Fahrmodus betreibbar ist, in welchem das Kraftfahrzeug mithilfe eines Fahrerassistenzsystems zur autonomen Fahrzeugführung selbsttätig eine sowohl eine Längsführung als auch eine Querführung des Kraftfahrzeugs umfassende Fahrzeugführung durchführt. Das Kraftfahrzeug ist ferner in einem manuellen Fahrmodus, bei dem der Fahrer die Längs- und Querführung steuert, betreibbar. Das Kraftfahrzeug kann beispielsweise wahlweise in einem autonomen Fahrmodus der Stufe 3 oder 4 gemäß eingangs genannter VDA-Einteilung oder in einem manuellen Fahrmodus (Stufe 0 gemäß eingangs genannter VDA-Einteilung) betrieben werden. Derartige Fahrzeuge sind an sich bereits aus dem Stand der Technik bekannt.

Lediglich beispielhaft ist erwähnt, dass das Kraftfahrzeug im Fahrbetrieb Informationen über die bevorstehende Strecke erhält, unter anderem durch Kameras und Sensoren, mittels Car2Car- bzw. Car2Infrastructure-Kommunikation, durch Kartendaten, durch Navigationsdaten etc. Daraus generiert das Fahrzeug Streckenabschnitte, die automatisiert gefahren werden können, und Abschnitte, die nicht automatisiert gefahren werden können bzw. wo in Stufe 3 oder 4 eine Übernahme der Fahraufgabe (Fahrfunktion) durch den Fahrer nötig ist. Durch eine geeignete Mensch-Maschine-Schnittstelle wird dies dem Fahrer im Fahrzeug entsprechend angezeigt und er gegebenenfalls in einer definierten Warnkaskade zur Übernahme aufgefordert.

Um den Fahrer die Aufforderung zur bevorstehenden Übernahme der Fahrfunktion signalisieren zu können, bei dem der Fahrer beispielsweise die Fahrfunktion wieder von einer autonomen Fahrfunktion des Kraftfahrzeugs übernehmen soll (Wechsel zum manuellen Fahrbetrieb), umfasst das Verfahren 100 den Schritt 110, bei dem zunächst eine Information empfangen wird, die Angaben enthält, wann dieser Wechsel der Fahrfunktion stattfinden soll. Beispielsweise kann die verbleibende Restzeit oder Restfahrstrecke bis zur Übernahme der Fahrfunktion als Information empfangen werden.

Eine derartige Information kann von einem Assistenzsystem zur autonomen Fahrzeugführung erzeugt und übermittelt werden. Derartige Systeme ermitteln fortlaufend den aktuellen und vorausberechneten Status bezüglich der automatisierten Fahrt, in Form der verbliebenen Zeit (Restzeit) und/oder Stecke (Restfahrstrecke) für den autonomen Fahrbetrieb bis zur gewünschten Übernahme durch den Fahrer. Die Informationen können beispielsweise über ein CAN-Datenbus-Signal empfangen werden.

Die nachfolgenden Erläuterungen erläutern beispielhaft ein Verfahren zur Signalisierung einer Aufforderung zur Übernahme einer Fahrfunktion eines Kraftfahrzeugs durch einen Fahrer von einer autonomen Fahrfunktion des Kraftfahrzeugs, d. h., der Fahrer wird aufgefordert, die Fahrfunktion wieder manuell auszuüben nach einer Phase des autonomen Fahrens. Das Verfahren und die optischen Anzeigen können aber analog zur Signalisierung einer Aufforderung zur Übernahme einer Fahrfunktion durch die autonome Fahrfunktion von dem Fahrer eingesetzt werden, d. h., die optische Anzeige signalisiert ein Maß für die Restzeit und/oder Restfahrstrecke bis zu einer gewünschten Übernahme der manuell ausgeübten Fahrfunktion zum autonomen Betriebsmodus.

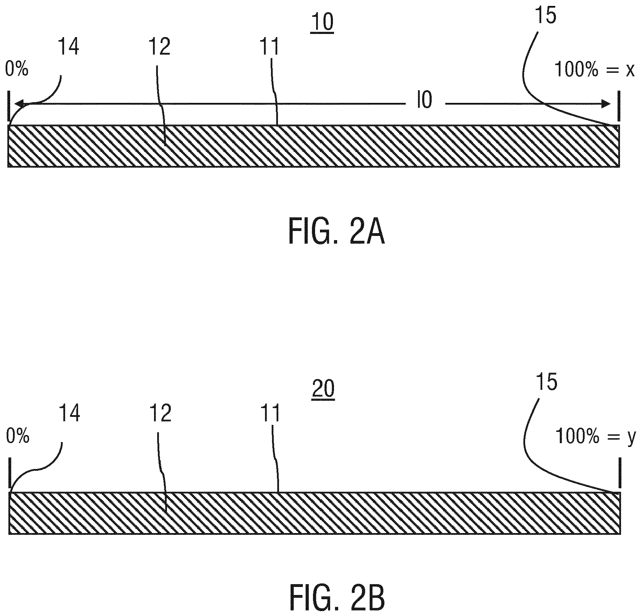

In Schritt 120 erfolgt dann die Darstellung der in Schritt 110 empfangenen Informationen mithilfe einer optischen Anzeige 10. Ein Beispiel einer solchen optischen Anzeige 10 ist in Figur 2A stark schematisiert dargestellt.

Die optische Anzeige 10 ist als bereichsweise ansteuerbarer Lichtstreifen 11 ausgeführt. Dieser kann beispielsweise mittels einer LED-Leiste realisiert werden, deren Anzeigezustand sich hinsichtlich Farbe, Intensivität der Beleuchtung, Frequenz und/oder Zahl der angesteuerten LEDs verändern kann. Der Lichtstreifen 11 bzw. die LED-Leiste kann an unterschiedlichen Orten im Innern des Fahrzeugs angebracht sein, z. B. entlang der Instrumententafel, einer Fahrerhausrückwand eines Nutzfahrzeugs, einem Dachhimmel oder einer Seitenverkleidung.

Der Anzeigezustand der optischen Anzeige 10 ändert sich bis zur tatsächlichen Übernahme der Fahrfunktion derart, dass aus dem aktuellen Anzeigezustand ein Maß für die Restzeit und/oder Restfahrstrecke bis zu einer gewünschten Übernahme der Fahrfunktion ableitbar ist.

Dies wird dadurch realisiert, dass eine Länge eines in dem ersten Anzeigezustand dargestellten Bereichs 12 mit der Restzeit und/oder Restfahrstrecke korreliert und insbesondere mit ablaufender Restzeit und/oder Restfahrstrecke immer kürzer wird.

Das eine Ende 15 des Leuchtstreifens 11 legt einen definierten Punkt x in der jeweiligen Einheit fest, welcher dementsprechend die Zeit oder die Strecke bis zur Übernahme der Fahrfunktion repräsentiert. Der Punkt x kann so definiert sein, dass er eine festgelegte Größe abbildet, z. B. immer 15 min oder 10 km vor der empfohlenen bzw. letztmöglichen Übernahme der Fahrfunktion. Diese Variante ist Figur 2A dargestellt. Die Darstellung nutzt hierbei Fahrzeug-, Fahr- und Streckendaten (z. B. GPS etc.).

Der Endpunkt kann alternativ so definiert sein, dass er eine variable Größe y abbildet, z. B. die Länge der gesamten Strecke, die man automatisiert fahren kann. Dies ist in Figur 2B dargestellt. Die optische Anzeige 20 unterscheidet sich von der in Figur 2A dargestellten im Wesentlichen durch die Bedeutung des Endpunkts 15 des Leuchtstreifens 11.

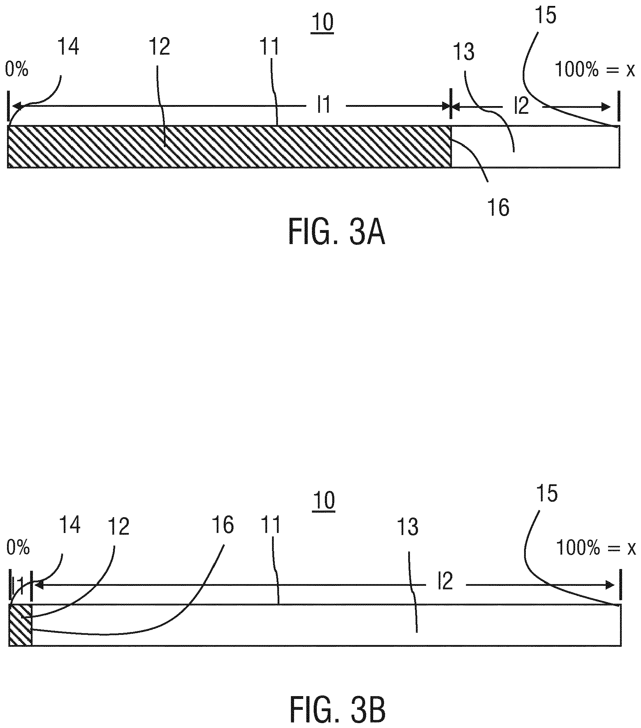

Die Figuren 2A, 3A und 3B zeigen die optische Anzeige 10 in Form des Lichtstreifens jeweils zu unterschiedlichen Zeitpunkten und illustrieren, dass eine Länge eines in dem ersten Anzeigezustand dargestellten Bereichs 12 des Leuchtstreifens 11 mit der Restzeit und/oder Restfahrstrecke korreliert und insbesondere mit ablaufender Restzeit und/oder Restfahrstrecke immer kürzer wird.

Figur 2A zeigt die optische Anzeige 10 in einem Anfangszustand, der erzeugt wird, wenn dem Fahrer erstmals eine Aufforderung zur Übernahme der Fahrfunktion des Kraftfahrzeugs signalisiert werden soll.

Gemäß der Ausführungsform, die in den Figur 2A dargestellt ist, erfolgt dies zu einem vorher definiertem Punkt x in der definierten Einheit (Restzeit oder Restfahrstrecke). Ein Wert von x = 15 min bedeutet, dass die optische Anzeige 10 dem Fahrer 15 min vor der notwendigen oder gewünschten Übernahme der Fahrfunktion in dem im Figur 2A gezeigten Zustand angezeigt wird. Hierbei wird anfänglich die volle Länge l0 des Leuchtstreifens 11 in einem ersten Anzeigezustand, gekennzeichnet durch die schraffierte Fläche, dargestellt. Die Länge des in dem ersten Anzeigezustand dargestellten Bereichs 12 nimmt nachfolgend entsprechend der abnehmenden Restzeit ab.

Die optische Anzeige 10 wird bis zur tatsächlichen Übernahme der Fahrfunktion fortlaufend aktualisiert. So wird in Schritt 130 geprüft, ob der Fahrer die Fahrfunktion übernommen hat, und wenn nicht, dann wird ein aktualisierter Anzeigezustand in Schritt 120 angezeigt, wie in den Figuren 3A und 3B beispielhaft gezeigt.

Wurde in Schritt 130 jedoch festgestellt, dass der Fahrer die Fahrfunktion übernommen hat, so wird die optische Anzeige zur Signalisierung der Restzeit oder Restfahrzeit in Schritt 140 beendet. Der Leuchtstreifen 11 kann dann beispielsweise komplett ausgeschaltet sein oder in einem anderen Anzeigezustand angezeigt werden.

Figur 3A zeigt einen späteren Zustand des im ersten Anzeigezustand dargestellten Bereichs 12, bei dem die Restfahrzeit einen kleineren Wert aufweist. Entsprechend hat die Länge l1 des schraffierten Bereichs 12 in Figur 3A abgenommen, und die Länge l2 des nichtschraffierten Bereichs 13 hat entsprechend zugenommen. Der Bereich 13 wird in diesem Dokument auch als Bereich bezeichnet, der im zweiten Anzeigezustand angezeigt wird.

Figur 3B zeigt einen späteren Zustand des im ersten Anzeigezustand dargestellten Bereichs 12, bei dem die Restfahrzeit schon fast abgelaufen ist. Entsprechend hat die Länge l1 des schraffierten Bereichs 12 in Figur 3B weiter abgenommen, und die Länge l2 des nichtschraffierten Bereichs 13 hat entsprechend weiter zugenommen.

Der Anzeigezustand des Leuchtstreifens 11 bzw. des LED-Bands wird somit derart geändert, dass der Beleuchtungszustand die ablaufende Zeit- oder Streckeneinheit in einem automatisiert fahrenden Fahrzeug bis zur gewünschten Übernahme der Fahrfunktion repräsentiert.

Ein Maß für die Restzeit oder Restfahrstrecke bis zur gewünschten Übernahme der Fahrfunktion wird somit dadurch übermittelt, dass nur ein bestimmter Anteil 12 des Leuchtstreifens 11 beleuchtet bzw. farblich abgesetzt von einem restlichen Anteil bzw. Bereich 13 des Leuchtstreifens 11 ist. So wird das Ablaufen der Zeit bzw. Strecke darüber verdeutlicht, dass z. B. der blau beleuchtete Teil 12 des Leuchtstreifens 11 zum Fahrer hin kontinuierlich - gemäß der tatsächlich ablaufenden Einheit, z. B. Zeit, - abnimmt. Die Trennung 16 des beleuchteten bzw. farblich abgesetzten Teils 12 zum restlichen Anteil 13 des Leuchtstreifens 11 läuft demnach von einem Ende 15, z. B. ab dem definierten Zeitpunkt, bis hin zu dem anderen Ende 14, z. B. zum empfohlenen bzw. letztmöglichen Zeitpunkt der Fahrzeugübernahme durch den Fahrer, des Leuchtstreifens. Auf diese Art und Weise kann der Fahrer zu jeder Zeit und aus unterschiedlichen Orten im Fahrzeug abschätzen, wie lange die automatisierte Fahrt noch andauert. Das Prinzip des ablaufenden Leuchtstreifens 11 ist metaphorisch eine abbrennende/ablaufende "Zündschnur", wobei das Ende der Schnur zeitlich oder örtlich die Übernahme bzw. den ersten Zeitpunkt einer möglichen Übergabe der Fahraufgabe (Fahrfunktion) durch den Fahrer repräsentiert.

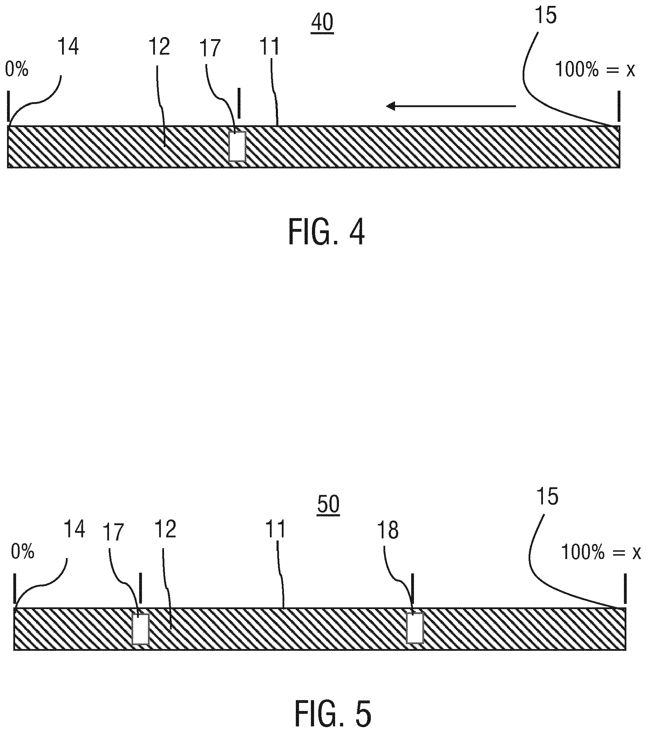

Die Figuren 4 und 5 zeigen schematisch eine optische Anzeige zur Signalisierung einer Aufforderung zur Übernahme einer Fahrfunktion gemäß einer weiteren Ausführungsform der Erfindung.

Die optische Anzeige 40 in Figur 4 weist eine Markierung 17 auf, deren Erreichen anzeigt, dass die Restzeit oder Restfahrstrecke eine vorbestimmte Höhe aufweist. Wird die Geschwindigkeit des Fahrzeugs verändert, während die optische Anzeige 40 bereits angezeigt wird, insbesondere während der Bereich 12 im ersten Anzeigezustand bereits abläuft, so wird der Verlauf zeitweise etwas schneller, so dass die Markierung 17 zu einem bestimmten Fixpunkt in der Warnkaskade immer an der gleichen Stelle steht, z. B. zwei Minuten oder zwei Kilometer vor der gewünschten Übernahme der Fahrfunktion. So hat der Fahrer immer eine Orientierung beim Blick auf den Leuchtstreifen 11, ohne noch zusätzliche Zeiten z. B. im Display einsehen zu müssen. Figur 5 zeigte eine weitere Variante der optischen Anzeige 50 mit einer weiteren Markierung 18.

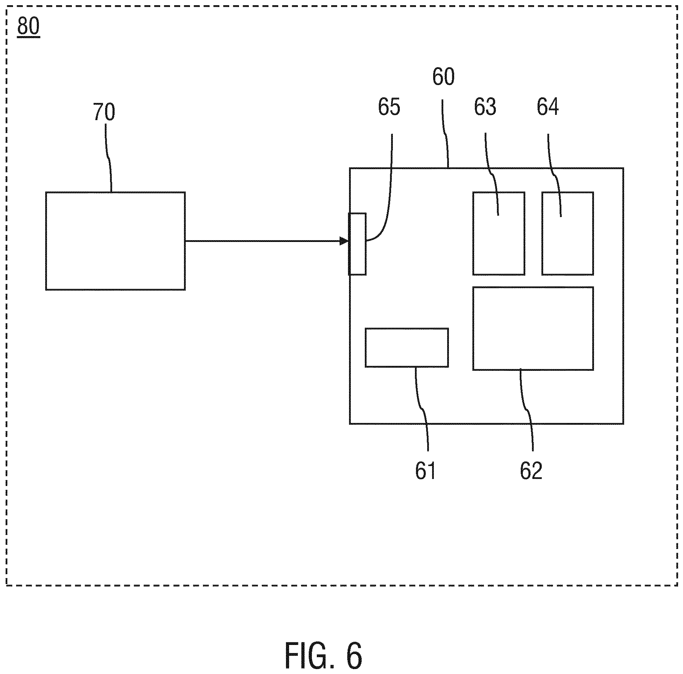

Figur 6 zeigt ein Blockdiagramm zur Illustration einer Anzeigevorrichtung gemäß einer Ausführungsform der Erfindung. Die Anzeigevorrichtung 60 ist ausgebildet, das Verfahren zur Signalisierung einer Aufforderung zur Übernahme einer Fahrfunktion, wie vorstehend beschrieben, auszuführen.

Das Kraftfahrzeug 80 ist, wie vorstehend beschrieben, ein Kraftfahrzeug, das wahlweise in einem autonomen Fahrmodus, teilautomatisierten oder in einem manuellen Fahrmodus betreibbar ist. Im autonomen Fahrmodus führt das Kraftfahrzeug mithilfe eines Fahrerassistenzsystems 70 zur autonomen Fahrzeugführung selbsttätig sowohl eine Längsführung als auch eine Querführung des Kraftfahrzeugs durch.

Derartige Fahrerassistenzsysteme 70 ermitteln fortlaufend den aktuellen und vorausberechneten Status bezüglich der automatisierten Fahrt, in Form der verbliebenen Zeit (Restzeit) und/oder Stecke (Restfahrstrecke) für den autonomen Fahrbetrieb bis zur gewünschten Übernahme durch den Fahrer. Die Informationen können beispielsweise über ein CAN-Datenbus-Signal von der Anzeigevorrichtung mittels einer entsprechend eingerichteten Schnittstelle 65 empfangen werden.

Die Anzeigevorrichtung 60 umfasst ferner ein Leuchtmittel 61 zur Erzeugung einer optischen Anzeige, z. B. in Form einer LED-Anordnung, und eine Steuereinrichtung 62 zur Ansteuerung des Leuchtmittels 61. Die Anzeigevorrichtung 60 kann ferner einen Prozessor 63 und eine Speichereinheit 64 aufweisen. Diese können auch als Teil der Steuereinrichtung 62 ausgeführt sein. Die Steuereinrichtung 62 ist ausgeführt, in Abhängigkeit von der über die Schnittstelle 65 empfangenen Information das Leuchtmittel 61 so anzusteuern, dass hiermit eine optische Anzeige erzeugt wird, deren Anzeigezustand sich bis zur tatsächlichen Übernahme der Fahrfunktion ändert, derart, dass aus dem aktuellen Anzeigezustand ein Maß für die Restzeit und/oder Restfahrstrecke bis zu einer gewünschten Übernahme der Fahrfunktion ableitbar ist.

Nachfolgend wird ein Anwendungsbeispiel beschrieben. Der Fahrer eines Nutzfahrzeugs, das mit ausreichender Automatisierungstechnologie ausgestattet ist, fährt auf die Autobahn. Das Fahrzeug zeigt dem Fahrer über einen weiß beleuchteten Leuchtstreifen, z. B. in Form einer weiß beleuchteten LED-Leiste in der Instrumententafel an, dass das Fahrzeug sich momentan in der manuellen Fahrt befindet. Die LED-Leiste reicht dabei vom rechten Ende der Instrumententafel bis zum Lenkrad. Nach einiger Zeit zeigt das Fahrzeug dem Fahrer an, dass die nächsten 100 km automatisiert gefahren werden können, und der Fahrer übergibt die Fahraufgabe an das System. Daraufhin lädt sich die LED-Leiste blau auf, um die automatisierte Fahrt darzustellen. Der Fahrer wendet sich nun zur Seite und übt eine Nebentätigkeit aus, z. B. liest die Mails mit seinem tragbaren Computer.

Zehn Minuten bevor die automatisierte Fahrt enden wird, beginnt das Verfahren bzw. die Anzeigevorrichtung, die verbleibende Zeit in dem autonomen Fahrmodus über die LED-Leiste zu signalisieren, d. h., der farblich abgesetzte Anteil der LED-Leiste nimmt stetig zum Fahrer hin ab. Nach fünf Minuten ist die LED-Leiste dementsprechend nur noch zur Hälfte beleuchtet, der Fahrer hat noch etwas Zeit. Der Fahrer sieht nach acht Minuten aus dem Augenwinkel, dass nur noch wenige LEDs in der Leiste beleuchtet sind, prüft die Umgebung, setzt sich in die Fahrposition und übernimmt z. B. mittels Tastendruck wieder die Fahraufgabe. Ab sofort leuchtet die LED-Leiste wieder weiß, was eine manuelle Fahrt signalisiert.

Zusammengefasst ermöglicht der vorliegende Ansatz zur Signalisierung einer Aufforderung zur Übernahme einer Fahrfunktion eine einfach verständliche Übermittlung der verbleibenden Zeit und/oder Strecke bis zur nächsten empfohlenen bzw. letztmöglichen Übernahme der Fahrfunktion mittels kontinuierlich abnehmender Beleuchtung der Leiste bzw. anderer Farbgebung. Eine derartige Visualisierung dieser Information ist in unterschiedlichen Bereichen des Fahrzeugs möglich. Der Fahrer kann sich einer Nebenaufgabe zuwenden und hat immer die Visualisierung der verbliebenen Zeit im Blick. Auch wenn der Fahrersitz gedreht ist oder der Fahrer gar nicht im Fahrersitz sitzt, kann optische Anzeige eingesehen werden oder bei Bedarf schnell erfasst werden. Ständiger Kontrollblick z. B. in das Kombiinstrument des Fahrzeugs kann entfallen.

### Bezugszeichenliste

- 10: Optische Anzeige
- 11: Leuchtstreifen
- 12: Im ersten Anzeigezustand angezeigter Bereich
- 13: Im zweiten Anzeigezustand angezeigter Bereich
- 14: Erstes Ende des Leuchtstreifens
- 15: Zweites Ende des Leuchtstreifens
- 16: Trennbereich
- 17: Markierung
- 18: Markierung
- 20: Optische Anzeige
- 40: Optische Anzeige
- 50: Optische Anzeige
- 60: Anzeigevorrichtung
- 61: Leuchtmittel
- 62: Steuereinrichtung
- 63: Prozessor
- 64: Speichereinheit
- 65: Schnittstelle
- 70: Fahrerassistenzsystem zur autonomen Fahrzeugführung
- 80: Kraftfahrzeug

## Patentansprüche

1. Verfahren zur Signalisierung einer Aufforderung zur Übernahme einer Fahrfunktion eines Kraftfahrzeugs durch einen Fahrer von einer autonomen Fahrfunktion des Kraftfahrzeugs oder durch die autonome Fahrfunktion von dem Fahrer,
wobei die Aufforderung zur Übernahme der Fahrfunktion durch eine optische Anzeige (10) signalisiert wird, deren Anzeigezustand sich bis zur tatsächlichen Übernahme der Fahrfunktion ändert, derart, dass aus dem aktuellen Anzeigezustand ein Maß für die Restzeit und/oder Restfahrstrecke bis zu einer gewünschten Übernahme der Fahrfunktion ableitbar ist,
wobei die optische Anzeige eine anteilig ansteuerbare Leuchtfläche umfasst, die in Abhängigkeit von der Restzeit und/oder Restfahrstrecke anteilig in einem ersten Anzeigezustand dargestellt wird, **dadurch gekennzeichnet,**
**dass** die Leuchtfläche an einem Dachbereich, einer Rückwand einer Fahrerkabine, einer Seitenverkleidung oder an einem Außenbereich des Kraftfahrzeugs angeordnet ist.

2. Verfahren nach Anspruch 1, wobei die anteilig ansteuerbare Leuchtfläche bereichsweise ansteuerbar ist und in Abhängigkeit von der Restzeit und/oder Restfahrstrecke bereichsweise in dem ersten Anzeigezustand dargestellt wird.

3. Verfahren nach Anspruch 2,
a) wobei die Leuchtfläche als Lichtleiste, Lichtstreifen (11) und/oder LED-Anordnung ausgeführt ist; und/oder
b) wobei die Leuchtfläche auf einem Display oder als Projektionsfläche angezeigt ist.

4. Verfahren nach Anspruch 2 oder 3, wobei eine Größe, insbesondere eine Länge, des in dem ersten Anzeigezustand dargestellten Bereichs (12) mit der Restzeit und/oder Restfahrstrecke korreliert.

5. Verfahren nach Anspruch 4, wobei eine Anfangsgröße, insbesondere eine Anfangslänge, des in dem ersten Anzeigezustand dargestellten Bereichs (12a)
a) eine fixe Restzeit oder Restfahrstrecke (x) bis zu einer gewünschten Übernahme der Fahrfunktion angibt; oder
b) eine prognostizierte Gesamtzeitdauer oder Gesamtstrecke (y) bis zu einer gewünschten Übernahme der Fahrfunktion angibt, insbesondere eine prognostizierte Gesamtzeitdauer oder Gesamtstrecke, die mit der autonomen Fahrfunktion gefahren wird.

6. Verfahren nach einem der vorhergehenden Ansprüche 2 bis 5, wobei ein nicht in dem ersten Anzeigezustand angezeigter Bereich (13) der Leuchtfläche in einem vom ersten Anzeigezustand verschiedenen zweiten Anzeigezustand angezeigt wird.

7. Verfahren nach Anspruch 6, wobei sich ein Größenverhältnis und/oder ein Trennbereich (16) zwischen dem im ersten Anzeigezustand angezeigten Bereich (12) und dem im zweiten Anzeigezustand angezeigten Bereich (13) entsprechend einem momentanen Wert der Restzeit und/oder der Restfahrstrecke bis zur gewünschten Übernahme der Fahrfunktion zeitlich verschiebt.

8. Verfahren nach einem der vorhergehenden Ansprüche, wobei die optische Anzeige mindestens eine Markierung (17. 18) umfasst, deren Erreichen anzeigt, dass die Restzeit oder Restfahrstrecke eine vorbestimmte Höhe aufweist, wobei die Markierung (17, 18) stets an der gleichen Stelle, insbesondere unabhängig vom aktuellen Anzeigezustand, angezeigt wird.

9. Verfahren nach einem der vorhergehenden Ansprüche, wobei der aktuelle Anzeigezustand, aus dem ein Maß für die Restzeit und/oder Restfahrstrecke bis zu einer gewünschten Übernahme der Fahrfunktion ableitbar ist, synchronisiert ist mit einer optischen oder akustischen Ausgabe zur Signalisierung der Aufforderung zur Übernahme der Fahrfunktion, die mittels einer weiteren Ausgabeeinrichtung des Kraftfahrzeugs ausgegeben wird.

10. Verfahren nach einem der vorhergehenden Ansprüche 2 bis 9, wobei die Leuchtfläche mindestens zwei Teilbereiche aufweist, die jeweils auf unterschiedlichen Stellen eines Bauteils im Fahrgastinnenraum angeordnet sind oder die auf unterschiedlichen Seiten in Bezug auf das Bauteil angeordnet sind.

11. Verfahren nach einem der vorhergehenden Ansprüche, ferner umfassend das Empfangen (110) einer Information, die eine verbleibende Restzeit und/oder Restfahrstrecke bis zu einem gewünschten Übernahmepunkt der Fahrfunktion angibt.

12. Anzeigevorrichtung (60) zur Signalisierung einer Aufforderung zur Übernahme einer Fahrfunktion eines Kraftfahrzeugs, umfassend ein Leuchtmittel (61) zur Erzeugung einer optischen Anzeige, eine Steuereinrichtung (62) zur Ansteuerung des Leuchtmittels (61), wobei die Anzeigevorrichtung (60) ausgebildet ist, das Verfahren gemäß einem der Ansprüche 1 bis 11 durchzuführen.

13. Anzeigevorrichtung nach Anspruch 12, wobei die Steuereinrichtung ausgeführt ist, in einem Nicht-Fahrbetrieb des Kraftfahrzeugs das Leuchtmittel in einen vorbestimmten Leuchtzustand zu versetzen, falls eine vorbestimmte Überwachungsbedingung erfüllt ist, wobei die vorbestimmte Überwachungsbedingung erfüllt ist, falls eine zuvor eingestellte Uhrzeit eingetreten ist oder ein Diebstahlversuch und/oder eine Bewegung oder Berührung in einem äußeren Nahbereich des Kraftfahrzeugs erkannt wird.

14. Anzeigevorrichtung nach Anspruch 12 oder 13, wobei die Steuereinrichtung ausgeführt ist, in einem Platoon-Fahrbetrieb des Kraftfahrzeugs eine Restzeit und/oder Restfahrstrecke bis zu einer prognostizierten Auflösung des Platoon-Fahrbetriebs des Fahrzeugs durch eine optische Anzeige mittels des Leuchtmittels zu signalisieren, wobei die Steuereinrichtung ausgeführt ist, den Anzeigezustand der optischen Anzeige bis zur tatsächlichen Auflösung des Platoon-Fahrbetriebs und somit den Zeitpunkt der Übernahme der Fahraufgabe zu ändern, derart, dass aus dem aktuellen Anzeigezustand ein Maß für die Restzeit und/oder bis zu der Auflösung des Platoon-Fahrbetriebs ableitbar ist.

15. Kraftfahrzeug (80), insbesondere Nutzfahrzeug, mit einer Anzeigevorrichtung (60) nach einem der vorhergehenden Ansprüche 12 bis 14.

## Claims

1. A method for signalling a request from a driver for a driving function of a motor vehicle to be taken over by an autonomous driving function of the motor vehicle or a request from the autonomous driving function for a driving function of a motor vehicle to be taken over by the driver,
wherein the request to take over the driving function is signalled by means of an optical display (10), the display state of which changes, until the driving function is actually taken over, in such a manner that a measure of the remaining time and/or remaining route until the driving function is taken over as desired can be derived from the current display state,
wherein the optical display comprises a luminous area which can be controlled proportionally and is proportionally presented in a first display state on the basis of the remaining time and/or remaining route, **characterized**
**in that** the luminous area is arranged in a roof region, on a rear wall of a driver's cab, on a side panel or in an outer region of the motor vehicle.

2. The method according to Claim 1, wherein the luminous area which can be proportionally controlled can be controlled in regions and is presented in the first display state in regions on the basis of the remaining time and/or remaining route.

3. The method according to Claim 2,
a) wherein the luminous area is in the form of a light band, a light strip (11) and/or an LED arrangement; and/or
b) wherein the luminous area is displayed on a display or as a projection area.

4. The method according to Claim 2 or 3, wherein a size, in particular a length, of the region (12) presented in the first display state correlates with the remaining time and/or remaining route.

5. The method according to Claim 4, wherein an initial size, in particular an initial length, of the region (12a) presented in the first display state
a) indicates a fixed remaining time or remaining route (x) until the driving function is taken over as desired; or
b) indicates a predicted total period or total distance (y) until the driving function is taken over as desired, in particular a predicted total period or total distance which is driven with the autonomous driving function.

6. The method according to one of the preceding Claims 2 to 5, wherein a region (13) of the luminous area which is not displayed in the first display state is displayed in a second display state which differs from the first display state.

7. The method according to Claim 6, wherein a size ratio and/or a separation region (16) between the region (12) displayed in the first display state and the region (13) displayed in the second display state is/are temporally shifted according to a current value of the remaining time and/or the remaining route until the driving function is taken over as desired.

8. The method according to one of the preceding claims, wherein the optical display comprises at least one mark (17, 18), the reaching of which indicates that the remaining time or remaining route has a predetermined level, wherein the mark (17, 18) is always displayed at the same location, in particular irrespective of the current display state.

9. The method according to one of the preceding claims, wherein the current display state, from which a measure of the remaining time and/or remaining route until the driving function is taken over as desired can be derived, is synchronized with an optical or acoustic output for signalling the request to take over the driving function, which is output by means of a further output device of the motor vehicle.

10. The method according to one of the preceding Claims 2 to 9, wherein the luminous area has at least two sections which are each arranged at different points of a component in the passenger compartment or are arranged on different sides with respect to the component.

11. The method according to one of the preceding claims, also comprising receiving (110) an item of information which indicates a leftover remaining time and/or remaining route until a desired takeover point of the driving function.

12. A display apparatus (60) for signalling a request to take over a driving function of a motor vehicle, comprising a luminous means (61) for generating an optical display, a control device (62) for controlling the luminous means (61), wherein the display apparatus (60) is designed to carry out the method according to one of Claims 1 to 11.

13. The display apparatus according to Claim 12, wherein the control device is designed to change the luminous means to a predetermined luminous state in a non-driving mode of the motor vehicle if a predetermined monitoring condition has been satisfied, wherein the predetermined monitoring condition has been satisfied if a previously set time has occurred or an attempted theft and/or a movement or contact in an outer vicinity of the motor vehicle is/are detected.

14. The display apparatus according to Claim 12 or 13, wherein the control device is designed to signal, in a platoon driving mode of the motor vehicle, a remaining time and/or remaining route until predicted termination of the platoon driving mode of the vehicle by way of an optical display using the luminous means, wherein the control device is designed to change the display state of the optical display until the actual termination of the platoon driving mode and therefore to change the time at which the driving task is taken over in such a manner that a measure of the remaining time and/or the time until the termination of the platoon driving mode can be derived from the current display state.

15. A motor vehicle (80), in particular a commercial vehicle, having a display apparatus (60) according to one of the preceding Claims 12 to 14.

## Revendications

1. Procédé de signalisation d'une demande de prise d'une fonction de conduite d'un véhicule automobile par un conducteur à partir d'une fonction de conduite autonome du véhicule automobile ou d'une fonction de conduite autonome du conducteur,
dans lequel la demande de prise de la fonction de conduite est signalée par un affichage optique (10) dont l'état d'affichage change jusqu'à la prise effective de la fonction de conduite, de telle manière qu'une mesure du temps restant et/ou du parcours restant puisse être dérivée de l'état actuel d'affichage jusqu'à une prise souhaitée de la fonction de conduite,
dans lequel l'affichage optique comprend une surface d'éclairage à commande proportionnelle qui est représentée proportionnellement dans un premier état d'affichage en fonction du temps restant et/ou du parcours restant,
**caractérisé en ce que** la surface d'éclairage est disposée sur une zone de toit, une paroi arrière d'une cabine de conduite, un panneau latéral ou sur une zone extérieure du véhicule automobile.

2. Procédé selon la revendication 1, dans lequel la surface d'éclairage à commande proportionnelle peut être commandée par zones et est représentée par zones dans le premier état d'affichage en fonction du temps restant et/ou du parcours restant.

3. Procédé selon la revendication 2,
a) dans lequel la surface d'éclairage est réalisée sous la forme d'une barre lumineuse, d'une bande lumineuse (11) et/ou d'un dispositif à LED ; et/ou
b) dans lequel la surface d'éclairage est affichée sur un afficheur ou sous la forme d'une surface de projection.

4. Procédé selon la revendication 2 ou 3, dans lequel une grandeur, en particulier une longueur, de la zone (12) représentée dans le premier état d'affichage est corrélée avec le temps restant et/ou le parcours restant.

5. Procédé selon la revendication 4, dans lequel une grandeur initiale, en particulier une longueur initiale, de la zone (12a) représentée dans le premier état d'affichage
a) indique un temps restant fixe ou un parcours restant fixe (x) jusqu'à qu'une prise souhaitée de la fonction de conduite ; ou
b) indique une durée totale ou un parcours total (y) prévu jusqu'à une prise souhaitée de la fonction de conduite, en particulier une durée totale prévue ou un parcours total prévu, qui est parcouru avec la fonction de conduite autonome.

6. Procédé selon l'une des revendications 2 à 5 précédentes, dans lequel une zone (13) de la surface d'éclairage qui n'est pas affichée dans le premier état d'affichage est affichée dans un second état d'affichage différent du premier état d'affichage.

7. Procédé selon la revendication 6, dans lequel un rapport de grandeurs et/ou une zone de séparation (16) entre la zone (12) affichée dans le premier état d'affichage et la zone (13) affichée dans le second état d'affichage se décale dans le temps en fonction d'une valeur instantanée du temps restant et/ou du parcours restant jusqu'à la prise souhaitée de la fonction de conduite.

8. Procédé selon l'une des revendications précédentes, dans lequel l'affichage optique comprend au moins un marqueur (17, 18) qui, lorsqu'il est atteint, indique que le temps restant ou le parcours restant présente une grandeur prédéterminée, dans lequel le marqueur (17, 18) est toujours affiché au même endroit, en particulier indépendamment de l'état d'affichage actuel.

9. Procédé selon l'une des revendications précédentes, dans lequel l'état d'affichage actuel à partir duquel une mesure du temps restant et/ou du parcours restant peut être obtenue jusqu'à une prise souhaitée de la fonction de conduite, est synchronisé avec une sortie optique ou acoustique destinée à signaler la demande de prise de la fonction de conduite, qui est délivrée au moyen d'un autre dispositif de sortie du véhicule automobile.

10. Procédé selon l'une des revendications 2 à 9 précédentes, dans lequel la surface d'éclairage comporte au moins deux sous-zones qui sont chacune situées à des emplacements différents d'un composant dans l'habitacle ou qui sont situées sur des côtés différents par rapport au composant.

11. Procédé selon l'une des revendications précédentes, comprenant en outre la réception (110) d'informations indiquant un temps restant et/ou un parcours restant jusqu'à un point de prise souhaité de la fonction de conduite.

12. Dispositif d'affichage (60) destiné à signaler une demande de prise d'une fonction de conduite d'un véhicule automobile, comprenant un moyen d'éclairage (61) destiné à générer un affichage optique, un dispositif de commande (62) destiné à commander le moyen d'éclairage (61), dans lequel le dispositif d'affichage (60) est conçu pour mettre en œuvre le procédé selon l'une des revendications 1 à 11.

13. Dispositif d'affichage selon la revendication 12, dans lequel, lorsque le véhicule automobile n'est pas en marche, le dispositif de commande est conçu pour faire passer le moyen d'éclairage dans un état d'éclairage prédéterminé lorsqu'une condition de surveillance prédéterminée est satisfaite, dans lequel la condition de surveillance prédéterminée est satisfaite si un temps préalablement réglé a été atteint ou si une tentative de vol et/ou un mouvement ou un contact dans une zone extérieure proche du véhicule automobile est détecté.

14. Dispositif d'affichage selon la revendication 12 ou 13, dans lequel, lors d'un mode de conduite en peloton du véhicule automobile, le dispositif de commande est conçu pour signaler un temps restant et/ou un parcours restant par le biais d'un affichage optique au moyen du moyen d'éclairage, jusqu'à une annulation prévue du mode de conduite en peloton du véhicule, dans lequel le dispositif de commande est conçu pour modifier l'état d'affichage de l'affichage optique jusqu'à l'annulation effective du mode de conduite en peloton et par conséquent jusqu'à l'instant de prise de la fonction de conduite, de telle manière qu'une mesure du temps restant et/ou du temps jusqu'à annulation du mode de conduite en peloton puisse être dérivée de l'état d'affichage actuel.

15. Véhicule automobile (80), en particulier véhicule utilitaire, comportant un dispositif d'affichage (60) selon l'une des revendications 12 à 14 précédentes.
